# EUROPÄISCHE PATENTSCHRIFT

(11) **EP 0 590 304 B1**
(45) Veröffentlichungstag und Bekanntmachung des Hinweises auf die Patenterteilung: **08.07.1998**
(21) Anmeldenummer: 93113561.0
(22) Anmeldetag: 25.08.1993
(51) Int. Cl.: H02M 1/08, H02M 3/156, G05F 1/613, H02M 7/12

(54) **Verfahren zur Vorsteuerung eines Schaltnetzteiles zum Ausgleich von Schwankungen der Speisespannung und Schaltungsanordnung zur Durchführung des Verfahrens**
Method for the pilot control of a switched power supply for the compensation of variations of the distribution voltage
Procédé pour la commande pilote d'une alimentation en courant commutée pour légalisation de la tension d'alimentation

(30) Priorität: 30.09.1992 DE 4232835
(43) Veröffentlichungstag der Anmeldung: 06.04.1994
(73) Patentinhaber: SIEMENS AKTIENGESELLSCHAFT, 80333 München (DE)
(72) Erfinder: Bichler, Helmut, Ing., D-82166 Gräfelfing (DE); Herfurth, Michael, Dipl.-Ing., D-82205 Gilching (DE)

(56) Entgegenhaltungen:
- DE-C- 2 912 234
- DE-C- 3 541 308
- US-A- 4 929 882
- Siemens: Datenbuch 1989/90 "ICs für industrielle Anwendungen"

## Beschreibung

Die Erfindung betrifft ein Verfahren zur Vorsteuerung eines Schaltnetzteiles zum Ausgleich von Schwankungen der Speisespannung nach dem Oberbegriff des Patentanspruchs 1 sowie eine Schaltungsanordnung zur Durchführung des Verfahrens nach dem Oberbegriff des Patentanspruchs 3.

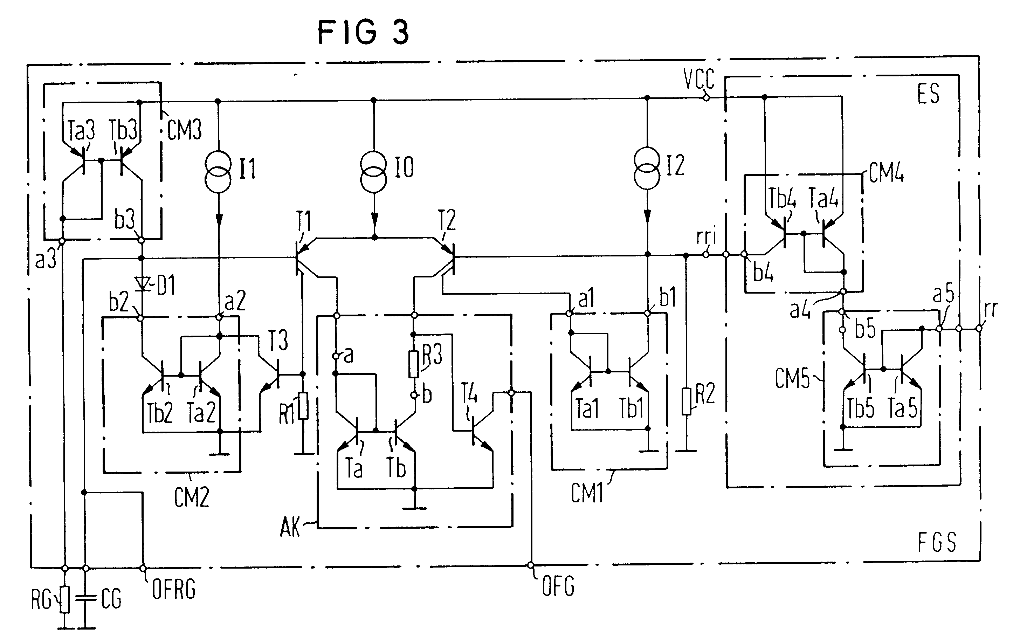

Sowohl Eintakt- als auch Gegentaktschaltnetzteile, insbesondere mit integrierten Steuerschaltungen, bei denen zum Ausgleich von Schwankungen der Speisespannung eine Vorsteuerung vorgesehen ist, sind bekannt. Unter anderem in dem Datenbuch 1989/90 "ICS für Industrielle Anwendungen" der Fa. Siemens AG, Seiten 182 bis 231 und 242 bis 260 sind komerziell erhältliche integrierte Steuerschaltungen TDA4700, TDA4718, TDA4716, TDA4714, TDA4918 und TDA4919 sowie deren Anwendung in Schaltnetzteilen beschrieben. Auch in dem Nachdruck von Siemens Components 5/88, S. 191 bis 194, 6/88, S. 260 bis 265 und 1/89, S. 12 bis 17 von R. Blöckl, erschienen unter dem Titel "TDA 4918/4919 - New Generation of Control ICs for Switched-Mode Power Supplies" insbesondere in Figur 3 des Teil 2, sind solche Schaltnetzteile gezeigt. Bei allen diesen Steuerschaltkreisen wird zum Ansteuern der elektronischen Schalter von mit diesen aufgebauten Schaltnetzteilen ein pulsdauermoduliertes Signal bereitgestellt, wobei die Pulsdauer sowohl von einer Ausgangsspannungsreglerschaltung als auch von einer die Speisespannung berücksichtigenden Vorsteuerung festgelegt wird. Die beschriebenen integrierten Schaltkreise enthalten unter anderem einen Frequenzgenerator, einen Rampengenerator, einen Komparator, der das Ausgangssignal des Rampengenerators mit einem in Abhängigkeit vom Momentanwert der Ausgangsspannung des Schaltnetzteiles (und somit vom Laststrom) festgelegten Spannungspegel vergleicht und ein Flip-Flop, das vom Frequenzgenerator und von dem besagten Komparator angesteuert wird und somit für den Normalbetrieb die Impulsdauer der Ansteuerimpulse für den bzw. die elektronischen Schalter eines mit der Ansteuerschaltung realisierten Schaltnetzteiles festlegt. Die Steigung der steigenden Flanke des Ausgangssignales des Rampengenerators ist durch Variation eines Steuerstromes veränderbar.

Bei den bekannten Schaltnetzteilen wird ein Verfahren zur Vorsteuerung eingesetzt, die dem Ausgleich von Speisespannungsschwankungen dient, wobei eine Veränderung der Speisespannung zu einer Veränderung der Steigung der steigenden Flanke des Rampengenerators führt. Bei einer größeren Speisespannung ist die Steigung der steigenden Flanke des Rampengeneratorausgangssignals größer, so daß der vom Ausgangsspannungsregler beeinflußte Schwellwert des Komparators, der dem Rampengenerator nachgeschaltet ist, eher erreicht wird, als bei niedrigerer Speisespannung und folglich flacherem Rampenverlauf. Innerhalb gewisser Grenzen braucht somit eine Änderung der Speisespannung nicht von dem für das Konstanthalten der Ausgangsspannung vorgesehenen Regler durch Anpassen des Schwellwertes des Komparators ausgeregelt zu werden.

Dieses bekannte Verfahren zur Vorsteuerung, bei dem die Rampensteigung gesteuert wird, ist sinnvoll für Speisespannungen, die von einem Nennwert nicht allzu sehr abweichen, also beispielsweise für gleichgerichtete Sinusspannungen, die durch eine Kapazität teilweise geglättet sind. Da die Steigung der steigenden Flanke eines Rampengeneratorausgangssignales nicht beliebig verändert werden kann, insbesondere nicht beliebig groß werden kann, wie es bei großen Abweichungen der Speisespannungen von einem mittleren Wert nach oben erforderlich wäre, ist bei bekannten Schaltnetzteilen entweder eine Aufbereitung der Speisespannung, beispielsweise mit Hilfe einer Kapazität, oder ein Ausregeln von Schwankungen der Speisespannung durch den die Ausgangsspannung konstanthaltenden Regler erforderlich.

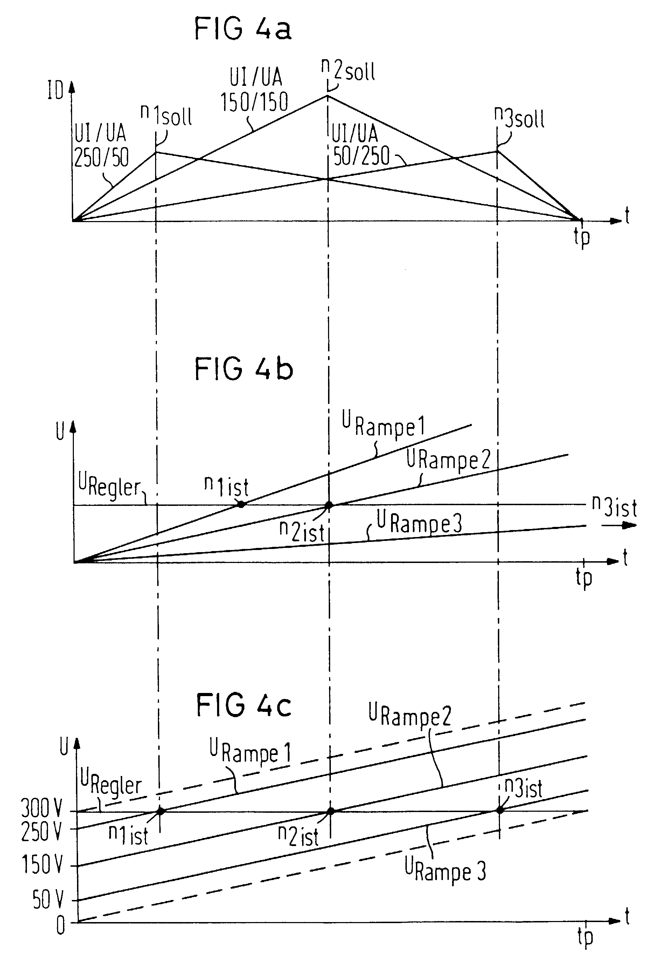

Insbesondere zur Vorsteuerung einer Eingangsspannung in Form einer nicht geglätteten gleichgerichteten Sinusspannung ist auch eine richtige Vorgabe im Bereich des Nulldurchgangs und im Bereich der Amplitude wichtig. Hier läßt sich eine gute Vorsteuerung über den gesamten Arbeitsbereich mittels gesteuerter Rampensteigung nicht erreichen. Die Grenzen eines Verfahrens zur Vorsteuerung eines Schaltnetzteiles mit Hilfe einer variablen Rampensteigung sind in Figur 4, insbesondere in Figur 4b in Verbindung mit Figur 4a in einem Beispiel verdeutlicht.

Figur 4a zeigt in schematischer Darstellung den Strom durch die Drossel eines Hochsetzstellers für den beispielhaften Fall, daß die Ausgangsgleichspannung UA 300 V beträgt und eine sinusförmige Eingangsspannung UI mit einem Scheitelwert ÛI von 300 V als Speisespannung vorgesehen ist. der Momentanwert der Eingangsspannung UI ist als Parameter vorgesehen und Figur 4a zeigt für eine bestimmte konstante Last das Soll-Tastverhältnis bezogen auf die jeweilige Eingangsspannung. Hierbei ist das Tastverhältnis n_{1Soll} einem Momentanwert der Eingangsspannung von UI = 250 V zugeordnet, das Tastverhältnis n_{2Soll} ergibt sich bei einem Momentanwert der Eingangsspannung UI von 150 V und das Tastverhältnis n_{3Soll} ergibt sich für eine Eingangsspannung UI von 50 V.

Figur 4b zeigt den Spannungsverlauf an zwei Signaleingängen eines Komparators, der für die Vorsteuerung verantwortlich ist für den Fall einer Vorsteuerung mittels variabler Rampensteigung. Hierbei stellt die mit U_{Regler} bezeichnete waagerechte gerade Linie die auf eine bestimmte, konstante Last bezogene Ausgangsspannung eines Reglers dar. Die Rampenspannung U_{Rampe1} entspricht der vorgesteuerten Ausgangsspannung eines Rampengenerators für einen Momentanwert der Eingangsspannung UI = 250 V. Der Schnittpunkt dieser Rampe mit der Spannung U_{Regler} gibt das tatsächliche Tastverhältnis n_{1Ist} an. Die Rampenspannung U_{Rampe2} stellt sich bei einer Eingangsspannung UI von 150 V ein. Der Schnittpunkt dieser Rampe mit der Reglerausgangsspannung legt das Tastverhältnis n_{2Ist} fest. Die Rampenspannung U_{Rampe3} entspricht einer Eingangsspannung von UI = 5D V. Wie zu erkennen ist, schneidet diese Rampe nicht innerhalb der dargestellten Periode die Reglerausgangsspannung U_{Regler}. In dem dargestellten Beispiel ist also eine Vorsteuerung bei einem Momentanwert der Eingangsspannung von UI = 50 V nicht möglich. Auch das in dem Beispiel einer Eingangsspannung von UI = 250 V zugeordnete Tastverhältnis n_{1Ist} stimmt mit dem entsprechenden Soll-Tastverhältnis n_{1Soll} nicht überein. Wie der Figur 4b zu entnehmen ist, funktioniert die Vorsteuerung mittels gesteuerter Rampensteigung nur bei Eingangsspannungen gut, die in der Nähe des Nennwertes liegen, für den die Vorsteuerung dimensioniert wurde.

Aufgabe der Erfindung ist das bereitstellen eines Verfahrens zur Vorsteuerung eines Schaltnetzteiles, mit dem auch große Schwankungen der Speisespannung ausgeglichen werden können.

Diese Aufgabe wird gelöst durch ein Verfahren mit den Merkmalen des Patentanspruches 1. Eine günstige Ausgestaltungsform eines solchen Verfahrens ist Gegenstand des Unteranspruchs 2.

Eine Schaltungsanordnung zur Durchführung eines Verfahrens nach einem der Ansprüche 1 oder 2 ist Gegenstand des Patentanspruchs 3. eine günstige Ausgestaltungsform einer solchen Schaltungsanordnung ist Gegenstand des Anspruches 4.

Ein erfindungsgemäßes Verfahren zur Vorsteuerung eines Schaltnetzteiles zum Ausgleich von Schwankungen der Speisespannung unterscheidet sich von einem oben beschriebenen Verfahren nach dem Stande der Technik in erster Linie dadurch, daß eine Rampenspannung mit Gleichspannungsanteil und mit einer festen Rampensteigung mit einem in Abhängigkeit vom Momentanwert der Ausgangsspannung des Schaltnetzteiles festgelegten Spannungspegel verglichen wird und daß die Vorsteuerung durch eine Veränderung des Gleichanteiles der Rampe vorgenommen wird.

Durch dieses erfindungsgemäße Verfahren läßt sich eine fehlerfreie Vorsteuerung verwirklichen, d.h., daß die Vorsteuerung Schwankungen der Eingangsspannung UI voll ausgleicht und der Spannungsregler lediglich lastbedingte Schwankungen ausgleichen muß.

Im folgenden wird die Erfindung anhand der Figuren näher erläutert. Es zeigt:
- Figur 1: anhand eines Ausführungsbeispiels eines Hochsetzstellers eine mögliche Ausführungsform einer erfindungsgemäßen Schaltungsanordnung zur Durchführung eines Verfahrens nach Anspruch 1 oder 2;
- Figur 2: eine besonders günstige Alternative zu einer Schaltungsanordnung nach Figur 1;
- Figur 3: eine besonders günstige Ausführungsform einer Frequenzgeneratorschaltung nach Figur 2, die sowohl eine Taktfrequenz als auch eine Rampenspannung bereitstellt;
- Figur 4a: in schematischer Darstellung den Stromverlauf während einer Periode durch die Drossel eines Hochsetzstellers für den Fall einer sinusförmigen Eingangsspannung mit einem Amplitudenwert von 300 V und einer Ausgangsgleichspannung von 300 V mit dem Momentanwert der Eingangsspannung UI als Parameter für den Fall UI = 250 V, UI = 150 V und UI = 50 V;
- Figur 4b: den Verlauf der Spannungen am Komparatoreingang einer Schaltungsanordnung nach dem Stande der Technik mit Vorsteuerung mittels variabler Rampensteigung und zwar die für einen festen Lastwert festgelegte Ausgangsspannung U_{Regler} sowie drei, den Momentanwerten der Eingangsspannung UI nach Figur 4a zugeordnete Rampenspannungen U_{Rampe1}, U_{Rampe2} und U_{Rampe3};
- Figur 4c: die Spannungsverläufe wie Figur 4b, jedoch für den Fall einer erfindungsgemäßen Vorsteuerung durch Veränderung des Gleichspannungsanteiles der Rampenspannung.

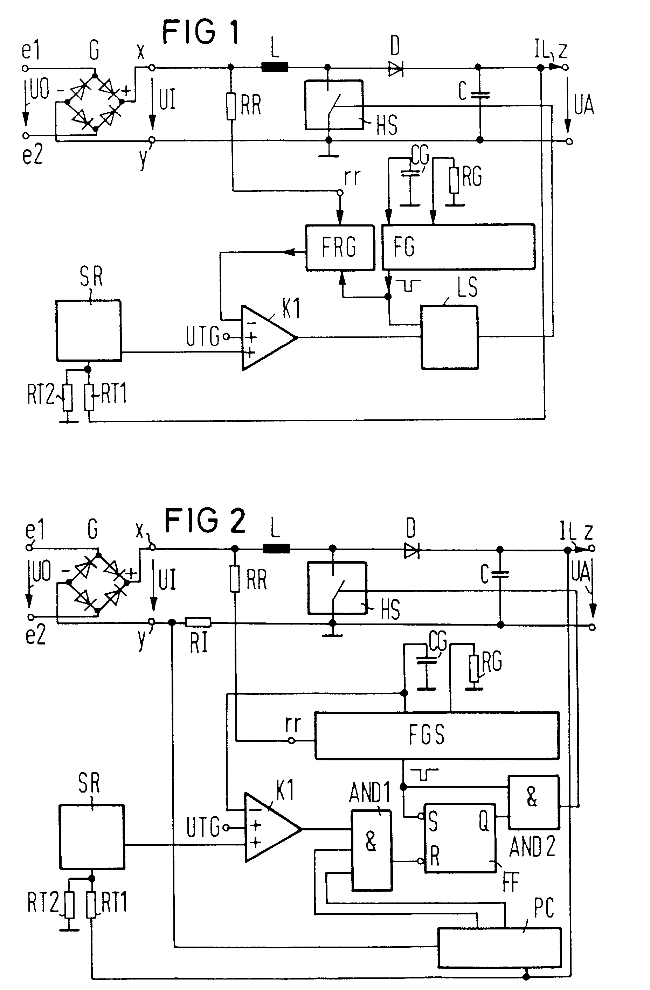

Figur 1 zeigt eine mögliche Ausführungsform einer erfindungsgemäßen Schaltungsanordnung zur Durchführung eines Verfahrens nach Anspruch 1 oder 2, kombiniert mit einem typischen Aufwärtsregler (Hochsetzsteller). Selbstverständlich kann eine erfindungsgemäße Schaltungsanordnung auch zur Steuerung anderer Schaltnetzteil-Grundschaltungen eingesetzt werden, wie beispielsweise einem Abwärtsregler (Tiefsetzsteller), einem Inverter, einem Aufwärts-Abwärts-Regler (Hoch-Tiefsetzsteller), einem Sperrwandler oder einem Durchflußwandler in Eintakt- oder Gegentakt-Schaltung.

Die Prinzipien der Schaltnetzteil-Grundschaltung sowie ihre Eigenheiten, Vor- und Nachteile sind unter anderem in dem Siemens-Fachbuch Schaltnetzteile von Walter Hirschmann und Alfred Hauenstein, 1990, auf den Seiten 15 bis 68 beschrieben.

In Figur 1 ist eine Gleichrichteranordnung G mit zwei Eingangsklemmen e1 und e2 und 2 Ausgangsklemmen x und y gezeigt. Die Eingangsklemmen el und e2 sind mit einer Wechselspannung UO beaufschlagt. Die Ausgangsklemmen der Gleichrichterschaltung G, x und y stellen demzufolge eine nicht geglättete, alternierende Gleichspannung UI bereit. Die Klemmen x und y sind gleichzeitig als Eingangsklemmen der Hochsetzsteller-Grundschaltung vorgesehen. Dieser Hochsetzsteller hat zwei Ausgangsklemmen z und y, an denen eine Ausgangs-Gleichspannung UA bereitgestellt wird. Die in Figur 1 gezeigte Grundschaltung des Hochsetzstellers besteht aus der Serienschaltung einer Drossel L und einer Diode D, die zwischen der Eigangsklemme x und der Ausgangsklemme z angeordnet sind, wobei die Diode D in Durchlaßrichtung zwischen einer Anschlußklemme der Drossel L und der Ausgangsklemme z angeordnet ist. Zwischen der Ausgangsklemme z und der Ausgangsklemme y ist eine Kapazität C vorgesehen. Der Schaltungsknoten, der die induktive Drossel L mit der Diode D verbindet, ist über einen Halbleiterschalter HS an die Klemme y schaltbar. Die Klemme y stellt in diesem Falle das Bezugspotential Masse dar. Die Steuerschaltung dieses Hochsetzstellers enthält u.a. einem Frequenzgenerator FG, dessen Frequenz durch eine gegen Bezugspotential geschaltete Kapazität CG und durch einen gegen Bezugspotential geschalteten Widerstand RG festgelegt ist. Der Ausgang des Frequenzgenerators FG ist an einen Takteingang eines Frequenz-Rampengenerators FRG sowie an einen Eingang einer Logikschaltung LS geschaltet. Der Frequenz-Rampengenerator FRG hat eine Eingangsklemme rr, die mit einer vom Momentanwert der Eingangsspannung UI an den Klemmen x und y des Schaltnetzteiles abhängigen elektrischen Größe beaufschlagt wird. Der Frequenz-Rampengenerator FRG stellt ein rampenförmiges Ausgangssignal bereit, dessen Frequenz von der Ausgangsfrequenz des Frequenzgenerators FG abhängt und dem ein Gleichspannungsanteil überlagert ist. Der Gleichspannungsanteil des Ausgangssignales des Frequenz-Rampengenerators FRG wird in Abhängigkeit von einer an der Klemme rr bereitgestellten elektrischen Größe verändert. Die an rr bereitgestellte elektrische Größe ist abhängig vom Momentanwert der Eingangsspannung UI an den Klemmen x und y des Schaltnetzteiles. Im Ausführungsbeispiel nach Figur 1 wird an der Eingangsklemme rr ein Strom eingeprägt dadurch, daß zwischen der Klemme x und der Eingangsklemme rr ein Widerstand RR vorgesehen ist.

Die Ausgangsklemme z des Hochsetzstellers ist über einen Spannungsteiler, gebildet aus einem ersten Teilerwiderstand RT1 und einem zweiten Teilerwiderstand RT2 gegen Bezugspotential Masse geschaltet. Der Verbindungsknoten zwischen den beiden Widerständen RT1 und RT2, der eine zur Ausgangsspannung UA proportionale Spannung bereitstellt, ist mit einem Eingang eines Spannungsreglers SR zusammengeschaltet. Der Spannungsregler SR gibt in Abhängigkeit von der Ausgangsspannung UA zwischen den Ausgangsklemmen z und y des dargestellten Hochsetzstellers ein Reglerausgangssignal ab. Hierzu ist der Ausgang des Spannungsreglers SR mit einem Eingang, hier mit einem nichtinvertierenden Eingang, einer Komparatorschaltung K1 verbunden. Der Ausgang des besagten Frequenzrampengenerators FRG ist mit einem anderen Eingang, hier einem invertierenden Eingang dieses Komparators K1 zusammengeschaltet. Der Ausgang dieser Komparatorschaltung K1 ist mit einem Eingang der besagten Logikschaltung LS verbunden. Die Logikschaltung LS stellt an ihrem Ausgang ein Steuersignal zum Ansteuern des Halbleiterschalters HS bereit, das abhängt von der Ausgangsgröße der Komparatorschaltung K1 und von dem Ausgangssignals des Frequenzgenerators FG. Das Ausgangssignal der Logikschaltung LS ist hierbei ein pulsweitenmoduliertes Signal, dessen Folgefrequenz durch die Ausgangsfrequenz des Frequenzgenerators FG festgelegt wird und dessen Pulsdauer durch die Ausgangsgröße der Komparatorschaltung K1 festgelegt wird. Das Ausgangssignal des Komparators K1 wird durch fallende Flanke des Ausgangssignals des Frequenzrampengenerators in einen logischen Zustand versetzt und dieser logische Zustand ändert sich, sobald der Momentanwert der steigenden Flanke des Ausgangssignales des Frequenzrampengenerators FRG die von dem Spannungsregler SR bereitgestellte Referenzspannung erreicht. Um zu große Pulsweiten am Ausgang der Logikschaltung LS und somit zu große Einschaltzeiten des Halbleiterschalters HS infolge von kurzzeitigen lastbedingten Regelschwingungen des Spannungsreglers SR zu vermeiden, kann, wie in Figur 1 dargestellt, der Komparator K1 mit einem weiteren nichtinvertierenden Eingang ausgestattet sein, der auf einer festen Grundspannung UTG gehalten wird.

Das Tastverhältnis des Frequenzgenerators FG legt die Grenzwerte für das Verhältnis der Einschaltdauer des Halbleiterschalters HS zur Periodendauer der Steuerschaltung fest.

Bei einem größeren Momentanwert der Eingangsspannung UI an den Klemmen x und y des Hochsetzstellers fließt durch den Wiederstand RR ein größerer Strom in die Eingangsklemme rr des Frequenzgenerators FRG. Demzufolge ist dem Ausgangsrampensignal des Frequenzgenerators FRG eine höhere Gleichspannung überlagert, so daß bei gleicher Rampensteigung dieses Signales das am invertierenden Eingang des Komparators K1 angelegte Signal eher den Pegel des am nichtinvertierenden Eingang dieses Komparators K1 anliegenden Signales erreicht. Für kleinere Momentanwerte der Eingangsspannung UI an den Klemmen x und y wird der Umschaltzeitpunkt des Komparators K1 innerhalb dieser Periode entsprechend später erreicht.

Figur 2 zeigt die Hochsetzstellergrundschaltung von Figur 1 mit einer speziellen Frequenzgeneratorschaltung FGS, mit einer speziellen Ausgestaltungsform der Logikschaltung LS sowie mit einer zusätzlichen Schutzschaltung PC, die eine Überlastung des Schaltnetzteiles bei zu hoher Ausgangsspannung UA oder zu hohem Strom durch die Drossel L verhindert.

Eine Ausgestaltungsform eines Frequenzgenerators FGS, wie er in Figur 2 vorgesehen ist, wird in Figur 3 im Detail gezeigt und an entsprechender Stelle beschrieben. Bei dem Frequenzgenerator FGS handelt es sich um einen Frequenzgenerator, der sowohl ein Rechtecksignal bereitstellt, als auch ein Rampensignal. Dem rampenförmigen Ausgangssignal dieses Frequenzgenerators FGS ist hierbei eine Gleichspannung überlagert, deren Wert von einer in einer Eingangsklemme rr des Frequenzgenerators FGS eingespeisten elektrischen Größe abhängt.

Der Frequenzgenerator FGS hat eine Steuerstromeingangsklemme rr, die mit dem Steuerstromeingang a5 einer Eingangs-Stromspiegelschaltung CM5 zusammengeschaltet ist. Als Ausführungsbeispiel einer solchen Stromspiegelschaltung ist eine Stromspiegelgrundschaltung aus zwei Bipolartransistoren Ta5 und Tb5 dargestellt, deren gemeinsamer Basisanschluß mit dem Kollektoranschluß des Transistors Ta5 zusammengeschaltet ist und den Steuerstromeingang a5 bildet und deren Emitteranschlüsse gemeinsam an ein Bezugspotential geschaltet sind. Der Kollektoranschluß des Transistors Tb5 ist hierbei mit dem Stromausgang b5 zusammengeschaltet. Diese Stromspiegelschaltung CM5 dient in dem gezeigten Ausführungsbeispiel als Stromsenke. Der Stromausgang b5 der Stromspiegelschaltung CM5 ist mit dem Steuerstromeingang a4 einer weiteren Stromspiegelschaltung CM4 zusammengeschaltet. Diese Stromspiegelschaltung CM4 ist als Stromquelle ausgebildet, die im Ausführungsbeispiel in analoger Weise zur Stromspiegelschaltung CM5 aus zwei pnp-Transistoren Tb4 und Ta4 gebildet ist. Der Kollektoranschluß des Transistors Tb4 ist in diesem Fall mit dem Stromausgang der Stromspiegelschaltung CM4 zusammengeschaltet. Die Emitteranschlüsse der beiden Transistoren Ta4 und Tb4 sind mit einem Versorgungspotential VCC verbunden. Der Stromausgang b4 der Stromquelle CM5 bildet den Ausgang der Eingangsstufe ES und ist mit einem internen Steuerstromeingang rri verbunden. Die Eingangsstufe ES für den Steuerstrom dient dazu, den Steuerstromeingang rr von der nachfolgenden Schaltung zu entkoppeln. Der Steuerstromeingang rri bildet einen Stromknoten mit einer gegen das Versorgungspotential VCC geschalteten Stromquelle I2, dem Stromausgang einer als Stromsenke ausgebildeten Stromspiegelschaltung CM1, dem Basisanschluß eines Transistors T2 und einem Anschluß eines Widerstandes R2, dessen anderer Anschluß mit dem dem Versorgungspotential VCC entgegengesetzten Potential Masse beaufschlagt ist. In dem gezeigten Ausführungsbeispiel ist die Stromspiegelschaltung CM1 in analoger Weise zur Stromspiegelschaltung CM5 aufgebaut mit einem Ausgangstransistor Tb1, dessen Kollektoranschluß den Stromausgang bl bildet und mit einem Eingangstransistor Ta1, dessen Kollektoranschluß gemeinsam mit dem Basisanschluß des Transistors Ta1 und des Transistors Tb1 den Steuerstromeingang al bildet. Der Transistor T2 ist im gezeigten Ausführungsbeispiel als Multikollektortransistor ausgeführt und ein Kollektor dieses Transistors T2 ist mit dem Steuerstromeingang al der Stromquelle CM1 verbunden. Der Transistor T2 ist im Ausführungsbeispiel als pnp-Transistor ausgebildet, dessen Emitteranschluß mit dem Emitteranschluß eines weiteren pnp-Transistors T1 zusammengeschaltet ist und gemeinsam mit diesem mit dem Stromausgang einer Stromquelle IO verbunden ist, die gegen das Versorgungspotential VCC geschaltet ist. Der Basisanschluß des ebenfalls als Multikollektortransistor ausgeführten Transistors T1 ist über eine Kapazität CG an Bezugspotential Masse geschaltet. Außerdem ist der Basisanschluß des Transistors T1 mit dem Stromausgang b3 einer als Stromquelle ausgebildeten Stromspiegelschaltung CM3 verbunden sowie mit dem Stromausgang b2 einer als Stromsenke ausgebildeten Stromspiegelschaltung CM2. Hierbei ist der Basisanschluß des Transistors T1 über eine in Durchlaßrichtung gepolte Diode D1 mit dem Stromausgang b2 der Stromsenke CM2 verbunden. Das hat den Vorteil, daß im Einschaltzeitpunkt die Basisspannung am Transistor T1 unmittelbar auf ca. 0,7 V angehoben wird. Der Basisanschluß des Transistors T1 bildet auch den Ausgang des Rampengenerators und ist mit der Ausgangsklemme OFRG verbunden. Der als Stromquelle geschaltete Stromspiegel CM3 ist in analoger Weise zu dem Stromspiegel CM4 aus zwei pnp-Transistoren Ta3 und Tb3 gebildet, wobei der Kollektoranschluß des Transistors Tb3 den Stromausgang der Schaltung CM3 darstellt und der Kollektoranschluß des Transistors Ta3 mit dem Steuerstromeingang a3 verbunden ist. Der Steuerstromeingang des Stromspiegels CM3 ist über einen Widerstand RG an Bezugspotential Masse geschaltet. Der Widerstand RG legt im wesentlichen gemeinsam mit der Kapazität CG die Frequenz des Frequenzgenerators fest. Der Steuerstromeingang a2 der Stromspiegelschaltung CM2, die aus zwei npn-Transistoren Ta2 und Tb2 analog zu der Stromspiegelschaltung CM5 realisiert ist, ist über eine Stromquelle I1 mit dem Versorgungspotential VCC verbunden. Der Kollektoranschluß eines npn-Transistors T3 ist mit dem Steuerstromeingang a2 der Stromspiegelschaltung CM2 zusammengeschaltet und der Emitteranschluß dieses Transistors T3 ist gegen Bezugspotential Masse geschaltet und somit mit den Emitteranschlüssen der Transistoren Ta2 und Tb2 verbunden. Der Basisanschluß dieses Transistors T3 ist mit einem Kollektoranschluß des Transistors T1 zusammengeschaltet und über einen Widerstand R1 an Bezugspotential Masse geschaltet. Die beiden Transistoren T1 und T2 sind als Oszillatorschaltung betrieben, wobei der Transistor T2 die Schaltschwellen umschaltet und der Transistor T1 zwischen dem Laden und dem Entladen der Kapazität CG umschaltet. Aufgrund dieser Konstellation sind beliebig kleine Frequenzen schaltbar. Durch den Widerstand R1 in einem Kollektorkreis des Transistors T1 wird eine Unsymmetrie in der Gesamtanordnung bewirkt, die verhindert, daß eine geringe Laufzeit zu einer Verlangsamung des Dszillator-Umschaltens führt. Die Stromspiegelschaltung CM1 in einem Kollektorkreis des Transistors T2 führt zu einer Mitkopplung, so daß die Schaltung abrupt umschalten kann. Die Gegentakttransistoren T1 und T2 müssen hierbei zwar aus der Sättigung gesteuert werden, was zu einem Zeitverlust führt. Aufgrund des geringen, zum Umschalten einer Auskoppelstufe erforderlichen Spannunghubes und weil keine Kapazitäten innerhalb der Gegentaktstufe umgeladen werden müssen, ist jedoch die Gesamtanordnung, bestehend aus der Oszillatorstufe und einer Auskoppelstufe AK schnell. Der zweite Kollektoranschluß des Transistors T1 ist mit einer Klemme a der Auskoppelstufe AK verbunden. Der zweite Kollektoranschluß des Transistors T2 ist an eine Klemme b der Auskoppelstufe AK geschaltet und außerdem an den Basisanschluß eines in dieser Auskoppelstufe enthaltenen Transistors T4. Hierbei ist der Basisanschluß des Transistors T4 über einen Widerstand R3 an die Klemme b geschaltet. Die Klemme b ist als Stromausgangsklemme einer Stromspiegelschaltung vorgesehen. Diese Stromspiegelschaltung ist als Stromsenke ausgebildet und wird aus zwei Transistoren Ta und Tb in bekannter Weise gebildet. Hierbei ist der Kollektoranschluß des Transistors Tb mit der Klemme b verbunden und der Basisanschluß der Transistoren Ta und Tb ist gemeinsam mit dem Kollektoranschluß des Transistors Ta mit der Stromeingangsklemme a dieser Stromspiegelschaltung und somit der Auskoppelstufe AK verbunden. Die Emitteranschlüsse der beiden Transistoren Ta und Tb sind an Bezugspotential Masse geschaltet. Der Emitteranschluß des als Auskoppeltransistor vorgesehenen Transistors T4 ist ebenfalls an Bezugspotential Masse geschaltet. Der Kollektoranschluß des Transistors T4 ist als sogenannter Open-Kollektor mit der Signalausgangsklemme OFG des Frequenzgenerators FGS verbunden. Durch den Widerstand R3 zwischen dem Basisanschluß des Auskoppeltransistors T4 und dem Stromausgang b der Stromsenke aus den Transistoren Ta und Tb wird die Umschaltzeit dieser Auskoppelstufe verkürzt. Die Transistoren Ta und Tb werden in Sättigung betrieben. Der Widerstand R3 verringert den Hub der Auskoppelstufe, da er die Spannung an der Basis des Auskoppeltransistors T4 auf ca. 0,4 V festhält.

Die Anordnung nach Figur 3 stellt an der Ausgangsklemme OFG ein Oszillatorsignal bereit und an der Ausgangsklemme OFRG, bedingt durch die integrierende Wirkung der Kapazität CG ein Rampensignal mit gleicher Frequenz.

Nachfolgend wird die Funktionsweise des durch die Transistoren T1 und T2 in Verbindung mit der Stromquelle IO bereitgestellten Oszillators beschrieben. Durch das Aufladen der Kapazität CG liegt am Basisanschluß des Transistors T1 eine kleine, steigende Spannung an, die zu einem Stromfluß im Transistor T1 führt. Der Transistor T2 führt demzufolge keinen Kollektorstrom. Da der Transistor T2 keinen Kollektorstrom führt, führt auch die Stromspiegelschaltung CM1 an ihrem Stromausgang bl keinen Strom, so daß der von der Eingangsstufe ES eingespeiste Strom und der von der Stromquelle I2 bereitgestellte Strom über den Widerstand R2 abfließen und am Basisanschluß des Transistors T2 demzufolge eine hohe Spannung anliegt. Wenn die Basisspannung am Transistor T1 gleich groß ist wie die Basisspannung am Transistor T2, führt dies zu einem geringen Kollektorstrom im Transistor T2 und die Stromspiegelschaltung CM1, die als Stromsenke geschaltet ist, führt vom Basisanschluß des Transistors T2 einen Strom über den Stromausgang b1 ab. Aufgrund der Mitkopplung wächst dieser Strom sehr schnell an, so daß der Transistor T1 keinen Kollektorstrom mehr führt. Die Basisspannung am Transistor T2 wird auf eine untere Schwelle gezogen. Führt der Transistor T1 keinen Kollektorstrom, so fällt über den Widerstand R1 keine Spannung ab. Aufgrund dessen entlädt die als Stromsenke geschaltete Stromspiegelschaltung CM2 über den Stromausgang b2 und die Diode D1 die Kapazität CG. Die Stromspiegelschaltung CM2 dient nämlich zum Endladen der Kapazität CG und die Stromspiegelschaltung CM3 dient zum Aufladen der Kapazität CG. Das Verhältnis der steigenden zur fallenden Flanke eines an der Kapazität CG und somit an der Ausgangsklemme DFRG anliegenden Signales kann durch das Stromverhältnis der Stromsenke CM2 und der Stromquelle CM3 eingestellt werden.

Figur 4c zeigt den Spannungsverlauf an zwei Signaleingängen eines Komparators, der für die Vorsteuerung verantwortlich ist für den Fall einer erfindungsgemäßen Vorsteuerung. Figur 4c zeigt somit einen ähnlichen Zusammenhang wie Figur 4b, jedoch mit dem Unterschied, daß die Rampenspannung U_{RAMPE1} sich von der Rampenspannung U_{RAMPE2} und von der Rampenspannung U_{RAMPE3} nicht in ihrer Steigung unterscheiden sondern durch die Höhe einer der Rampe überlagerten Gleichspannung. Die Rampen U_{RAMPE1}, U_{RAMPE2} und U_{RAMPE3} verlaufen somit parallel zueinander. In dem in Figur 4 dargestellten Beispiel liegt hierbei der Schnittpunkt der jeweiligen Rampenspannung mit der Referenzspannung U_{REGLER} an dem Komparator derart, daß die tatsächlichen Tastverhältnisse n₁ᵢₛₜ, n₂ᵢₛₜ und n₃ᵢₛₜ jeweils den Solltastverhältnissen n_{1SOLL}, n_{2SOLL} und n_{3SOLL} für eine optimale Vorsteuerung, wie sie in Figur 4a dargestellt sind, entsprechen. Mit einem erfindungsgemäßen Verfahren zur Vorsteuerung eines Schaltnetzteiles zum Ausgleich von Schwankungen der Speisespannung ist also im Idealfall unabhängig von der Eingangsspannung eine Vorsteuerung des Schaltnetzteiles möglich, so daß der Spannungsregler nur noch die lastbedingten Schwankungen der Ausgangsspannung UA eines entsprechenden Schaltnetzteiles ausgleichen muß.

Selbstverständlich ist die Anwendung einer solchen Vorsteuerung nicht auf die Ausführungsform des Ausführungsbeispieles beschränkt. Das gleiche Verfahren kann auch bei Sperrwandlerschaltnetzteilen, bei Hoch-/Tiefsetzstellern und bei Tiefsetzstellern angewendet werden.

## Patentansprüche

1. Verfahren zur Vorsteuerung eines Schaltnetzteiles zum Ausgleich von Schwankungen der Speisespannung, wobei das Schaltnetzteil mindestens einen elektronischen Schalter (HS) und eine Steuerschaltung mit einem Frequenzgenerator (FG, FGS), einer Komparatorschaltung (K1) und einer Kippschaltung (LS, AND1, AND2, FF) enthält, wobei die Kippschaltung (LS, AND1, FF) in Abhängigkeit von dem Ausgangssignal der Komparatorschaltung (K1) und dem Ausgangssignal des Frequenzgenerators (FG, FGS) ein Ansteuersignal für den bzw. die elektronischen Schalter (HS) bereitstellt, wobei die Schaltschwelle der Komparatorschaltung (K1) in Abhängigkeit vom Laststrom (IL) des Schaltnetzteiles festgelegt wird, wobei ein Signaleingang (-) der Komparatorschaltung (K1) mit einem periodisch steigenden und fallenden Steuersignal mit von dem Frequenzgenerator (FG, FGS) festgelegter Frequenz angesteuert wird und wobei die Signalform dieses Steuersignales in Abhängigkeit vom Momentanwert der Speisespannung (UI) des Schaltnetzteiles verändert wird,
**dadurch gekennzeichnet,**
daß das periodisch steigende und fallende Steuersignal aus einem Gleichanteil und einem Wechselanteil besteht, wobei bei Schwankungen der Speisespannung des Schaltnetzteiles die Steigung des Steuersignales konstant ist und nur der Gleichanteil des Steuersignals in Abhängigkeit der Schwankungen der Speisespannung verändern wird.

2. Verfahren nach Anspruch 1,
**dadurch gekennzeichnet,**
daß der Wechselanteil des periodisch steigenden und fallenden Steuersignales sägezahnförmig ist.

3. Steuerschaltung für ein mindestens einen elektronischen Schalter (HS) aufweisendes Schaltnetzteil zur Durchführung eines Verfahrens nach einem der Patentansprüche 1 oder 2 zum, Ausgleich von Schwankungen der Speisespannung, mit einem Frequenzgenerator (FG, FGS), einer Komparatorschaltung (K1), einer Kippschaltung (LS, AND1, AND2, FF) und mit einem Schaltungsteil (FGS, FRG), der ein periodisch steigendes und fallendes Steuersignal mit von dem Frequenzgenerator (FG, FGS) festgelegter Frequenz bereitstellt, wobei die Kippschaltung (LS, AND1, AND2, FF) in Abhängigkeit von dem Ausgangssignal der Komparatorschaltung (K1) und dem Ausgangssignal des Frequenzgenerators (FG, FGS) ein Ansteuersignal für den bzw. die elektronischen Schalter (HS) bereitstellt, wobei die Schaltschwelle der Komparatorschaltung (K1) in Abhängigkeit vom Laststrom (IL) des Schaltnetzteiles festgelegt wird, wobei ein Signaleingang (-) der Komparatorschaltung (K1) mit dem besagten periodischen Steuersignal angesteuert wird und wobei die Signalform dieses Steuersignales in Abhängigkeit vom Momentanwert der Speisespannung (UI) des Schaltnetzteiles verändert wird,
**dadurch gekennzeichnet,**
daß das aus einem Gleichanteil und einem Wechselanteil bestehende periodisch steigende und fallende Steuersignal durch einen Schaltungsteil bereitgestellt wird, der eine Schaltungsanordnung mit einem ersten und zweiten Transistor (T1, T2), einem Widerstand (R2) und eine Eingangsstufe (ES) aufweist, wobei die gekoppelten Emitter des ersten und zweiten Transistors (T1, T2) mit einem Pol der Versorgungsspannungsquelle (VCC) verbunden sind und die Basis des einen Transistors (T2) mit der Eingangsstufe (ES) und dem Widerstand (R2) verbunden ist.

4. Steuerschaltung nach Anspruch 3,
**gekennzeichnet** durch einen Frequenzgenerator (FGS), der sowohl ein Rechtecksignal als auch ein rampenförmiges Signal mit gleicher Periodendauer bereitstellt.

## Claims

1. Method for the pilot control of a switched-mode power supply for the purpose of compensating fluctuations in the supply voltage, the switched-mode power supply containing at least one electronic switch (HS) and a control circuit with a frequency generator (FG, FGS), a comparator circuit (K1) and a flip-flop (LS, AND1, AND2, FF), the flip-flop (LS, AND1, FF) providing a control signal for the electronic switch(es) (HS) as a function of the output signal of the comparator circuit (K1) and the output signal of the frequency generator (FG, FGS), the operating point of the comparator circuit (K1) being fixed as a function of the load current (IL) of the switched-mode power supply, a signal input (-) of the comparator circuit (K1) being controlled by means of a periodically rising and falling control signal at a frequency fixed by the frequency generator (FG, FGS), and the signal shape of this control signal being varied as a function of the instantaneous value of the supply voltage (UI) of the switched-mode power supply, characterized in that the periodically rising and falling control signal consists of a DC component and an AC component, it being the case that given fluctuations in the supply voltage of the switched-mode power supply the rise in the control signal is constant and only the DC component of the control signal is varied as a function of the fluctuations in the supply voltage.

2. Method according to Claim 1, characterized in that the AC component of the periodically rising and falling control signal has a saw-tooth shape.

3. Control circuit for a switched-mode power supply, having at least one electronic switch (HS), for carrying out a method according to one of Patent Claims 1 or 2 for the purpose of compensating fluctuations in the supply voltage, having a frequency generator (FG, FGS), a comparator circuit (K1), a flip-flop (LS, AND1, AND2, FF), and having a circuit section (FGS, FRG) which provides a periodically rising and falling control signal at a frequency fixed by the frequency generator (FG, FGS), the flip-flop (LS, AND1, AND2,FF) providing a control signal for the electronic switch(es) (HS) as a function of the output signal of the comparator circuit (K1) and the output signal of the frequency generator (FG, FGS), the operating point of the comparator circuit (K1) being fixed as a function of the load current (IL) of the switched-mode power supply, a signal input (-) of the comparator circuit (K1) being controlled by means of the said periodical control signal, and the signal shape of this control signal being varied as a function of the instantaneous value of the supply voltage (UI) of the switched-mode power supply, characterized in that the periodically rising and falling control signal consisting of a DC component and an AC component is provided by a circuit section which has a circuit arrangement with a first and second transistor (T1, T2), a resistor (R2) and an input stage (ES), the coupled emitters of the first and second transistor (T1, T2) being connected to a pole of the supply voltage source (VCC), and the base of one transistor (T2) being connected to the input stage (ES) and the resistor (R2).

4. Control circuit according to Claim 3, characterized by a frequency generator (FGS) which provides both a square-wave signal and a ramp signal with the same period.

## Revendications

1. Procédé pour la commande pilote d'une alimentation en courant commutée pour l'égalisation de la tension d'alimentation, l'alimentation en courant commutée comprenant au moins un commutateur électronique (HS) et un circuit de commande avec un générateur de fréquence (FG, FGS), un circuit comparateur (K1) et une bascule (LS, AND1, AND2, FF), la bascule (LS, ANDI, FF) fournissant un signal de commande pour le resp. les commutateur/s électronique/s (HS) en fonction du signal de sortie du circuit comparateur (K1) et du signal de sortie du générateur de fréquence (FG, FGS), le seuil de commutation du circuit comparateur (K1) étant déterminé en fonction du courant de charge (IL) de l'alimentation en courant commutée, une entrée des signaux (-) du circuit comparateur (K1) étant commandée par un signal de commande périodiquement ascendant et descendant avec une fréquence déterminée par le générateur de fréquence (FG, FGS) et la forme de ce signal de commande étant modifiée en fonction de la valeur instantanée de la tension d'alimentation (Ul) de l'alimentation en courant commutée,
caractérisé en ce que le signal de commande périodiquement ascendant et descendant est formé par une composante continue et une composante alternative, la pente du signal de commande étant constante, lorsqu'il y a des variations de la tension d'alimentation de l'alimentation en courant commutée, et seule la composante continue du signal de commande étant modifiée en fonction des variations de la tension d'alimentation.

2. Procédé selon la revendication 1, caractérisé en ce que la composante alternative du signal de commande périodiquement ascendant et descendant est en dents de scie.

3. Circuit de commande pour une alimentation en courant commutée comprenant au moins un commutateur électronique (HS), pour l'exécution d'un procédé selon l'une des revendications 1 ou 2 pour l'égalisation de la tension d'alimentation, comprenant un générateur de fréquence (FG, FGS), un circuit comparateur (K1), une bascule (LS, AND1, AND2, FF), ainsi qu'une partie de circuit (FGS, FRG) qui fournit un signal de commande périodiquement ascendant et descendant avec une fréquence déterminée par le générateur de fréquence (FG, FGS), la bascule (LS, AND1, AND2, FF) fournissant un signal de commande pour le resp. les commutateur/s électronique/s (HS) en fonction du signal de sortie du circuit comparateur (K1) et du signal de sortie du générateur de fréquence (FG, FGS), le seuil de commutation du circuit comparateur (K1) étant déterminé en fonction du courant de charge (IL) de l'alimentation en courant commutée, une entrée des signaux (-) du circuit comparateur (K1) étant commandée par ledit signal de commande périodique et la forme de ce signal de commande étant modifiée en fonction de la valeur instantanée de la tension d'alimentation (Ul) de l'alimentation en courant commutée,
caractérisé en ce que le signal de commande périodiquement ascendant et descendant formé par une composante continue et une composante alternative est fourni par une partie de circuit qui comprend un montage avec un premier et un second transistor (T1, T2), une résistance (R2) et un étage d'entrée (ES), les émetteurs couplés des premier et second transistors (T1, T2) étant reliés à un pôle de la source de tension d'alimentation (VCC) et la base de l'un des transistors (T2) étant reliée à l'étage d'entrée (ES) et à la résistance (R2).

4. Circuit de commande selon la revendication 3, caractérisé par un générateur de fréquence (FGS) qui fournit à la fois un signal rectangulaire et un signal en forme de rampe ayant la même durée de période.
